# EUROPÄISCHE PATENTANMELDUNG

(11) **EP 2 735 584 A1**
(43) Veröffentlichungstag der Anmeldung: **28.05.2014**
(21) Anmeldenummer: 12194173.6
(22) Anmeldetag: 26.11.2012
(51) Int. Cl.: C08J 9/00, C08J 9/36, C08L 61/28

(54) **Thermoverformbarer Melaminharzschaumstoff mit partikelförmigem Füllmaterial**

(71) Anmelder: BASF SE, 67056 Ludwigshafen (DE)
(72) Erfinder: Steinke, Tobias Heinz, 67346 Speyer (DE); Baumgartl, Horst, 67063 Ludwigshafen (DE); Lenz, Werner, 67059 Ludwigshafen (DE); Hahn, Klaus, 67281 Kirchheim (DE)
(74) Vertreter: Steinbusch, Daniel

(57) **Zusammenfassung**

Die vorliegende Erfindung betrifft einen thermoverformbaren Melamin-/Formaldehyd-Schaumstoff, enthaltend 0,1 bis 50 Gew.-% wenigstens eines partikelförmigen Füllmaterials, wobei die Gew.-% auf das Gesamtgewicht aus zur Schaumstoffherstellung eingesetztem Melamin-/Formaldehyd-Vorkondensat und Füllmaterial bezogen sind, wobei das wenigstens eine partikelförmige Füllmaterial einen Schmelzpunkt von höchstens 220 °C aufweist, ein Verfahren zur Herstellung des thermoverformbaren Melamin-/Formaldehyd-Schaumstoffes, sowie die Verwendung des Melamin-/Formaldehyd-Schaumstoffes zur akustischen oder thermischen Isolierung im Bauwesen, im Automobil-, Schiffs- und Schienenfahrzeugbau, dem Bau von Raumfahrzeugen, in der Polsterindustrie oder zur Isolierung von Rohrleitungen.

## Beschreibung

Die vorliegende Erfindung betrifft thermokomprimierbare Melaminharzschaumstoffe, Verfahren zu deren Herstellung sowie deren Verwendung.

Offenzellige, elastische Schaumstoffe auf Basis von Melamin/Formaldehyd-Harzen sowie Verfahren zu ihrer Herstellung durch Erwärmen mit Heißluft, Wasserdampf oder Mikrowellenbestrahlung unter Aufschäumen und Vernetzen einer treibmittelhaltigen Lösung oder Dispersion eines Melamin/Formaldehyd-Vorkondensates sind bekannt und werden beispielsweise in EP-A 17672 und EP-A 37470 beschrieben.

Während sich einfache Formteile, beispielsweise Platten oder Streifen, aus dem Schaumstoff durch Schneiden oder Sägen herstellen lassen, sind für Formteile mit komplizierterer Raumform aufwändigere Formgebungsverfahren erforderlich. Solche kompliziert geformten Teile sind beispielsweise in Kraftfahrzeugen, beispielsweise Motorraumisolierung, oder Maschinen enthalten oder dienen als Rohrisolierung. Zur Herstellung solcher Teile offenbart die FR-A 1 108336, einen im aushärtenden Zustand befindlichen, aber noch verformbaren Schaum zu verpressen und anschließend den so verdichteten Schaum auszuhärten. Die US-A 3 504 064 und die EP-A 464 490 beschreiben Verfahren, bei denen der Schaum mit Wasser oder Wasserdampf behandelt und davor oder danach verformt wird. Die EP-A 111 860 beschreibt das Verpressen von Melaminharz-Schaumstoffen bei 60 bis 300 °C und mindestens 1,2 bar abs.

Die nach den vorgenannten Verfahren erhaltenen Formteile aus Melamin/Formaldehyd-Harz enthalten Restmengen an nicht umgesetztem Formaldehyd, die über lange Zeit kontinuierlich an die Umgebungsluft abgegeben werden. Diese Formaldehyd-Emissionen steigen mit zunehmender Temperatur und Feuchte an. Sie sind unerwünscht und insbesondere bei Verwendung der Formteile in geschlossenen Räumen nachteilig.

Die WO 01/94436 lehrt ein Verfahren zur Herstellung von Melamin/Formaldehyd-Schaumstoffen mit verminderter Formaldehyd-Emission, wozu ein Melamin-/Formaldehyd-Vorkondensat mit einem Molverhältnis Formaldehyd : Melamin größer als 2:1, eingesetzt wird. Die zu verschäumende, treibmittelhaltige Mischung wird durch Erhitzen zu beispielsweise quaderförmigen Strängen oder Blöcken aufgeschäumt. Danach werden die expandierten Schaumblöcke 1 bis 180 min bei 120 bis 300 °C getempert und ausgehärtet. Die auf diese Weise erhaltenen Schaumstoffe sind zwar formaldehydarm, jedoch nicht thermoformbar.

Die EP-A 1 505 105 beschreibt ein Verfahren zur Herstellung von Formteilen aus Melamin/Formaldehyd-Schaumstoffen mit geringer Formaldehyd-Emission, bei dem der Schaumstoff nach der Herstellung und vor dem Thermoformen bei Temperaturen zwischen 100 und 160 °C getempert wird. Die Schaumstoffe können in der Thermoverformung ein- oder beidseitig mit Deckschichten versehen oder kaschiert werden, beispielsweise mit Papier, Pappe, Glasvlies, Holz, Gipsplatten, Metallblechen oder -folien oder Kunststoff-Folien, die gegebenenfalls auch geschäumt sein können. Nach dem Pressen in einem Kontorwerkzeug wird eine gute Abformung des Presswerkzeugs mit stabilen, geschlossenen, mechanisch belastbaren Randlippen erzielt.

Die WO06/134083 beschreibt ein Verfahren zur Herstellung thermoverformbarer Melamin/Formaldehyd-Schaumstoffe mit geringer Formaldehydemission sowie die Herstellung von Formteilen durch Thermoformen. Die niedrigen Formaldehydemissionen werden durch Verwendung eines Melamin-/Formaldehyd-Vorkondensats mit einem Molverhältnis Melamin : Formaldehyd kleiner als 1:2, sowie durch die Verwendung von Formaldehydfängern erzielt.

Aus der WO 2012/113740 ist das Verschäumen von partikelförmigen organischen oder anorganischen Füllmaterialien mit Melamin-Formaldehyd-Kondensationsprodukten beschrieben. Es können auf diese Weise gefüllte Melaminharzschaumstoffe bereitgestellt werden, die die guten mechanischen Eigenschaften der ungefüllten Schaumstoffe weitgehend erhalten. Des Weiteren weist diese Schrift darauf hin, dass die Schaumstoffblöcke bzw. -platten mit partikelförmigem Füllmaterial in einem weiteren Verfahrensschritt thermokomprimiert werden können.

In der WO 2011/095409 werden beispielsweise Melamin/Formaldehyd-Schaumstoffe beschrieben, die Mikrokapseln mit einem mittleren Teilchendurchmesser von 0,5 - 100 µm enthalten. Die Mikrokapseln sind dabei bevorzugt in die Knotenpunkte oder Stege der Schaumstruktur eingebaut.

In der WO 2011/061178 werden Melamin/Formaldehyd-Schaumstoffe beschrieben, die expandierte Mikrohohlkugeln mit einem mittleren Teilchendurchmesser von 70 - 250 µm enthalten. Die Mikrohohlkugeln sind dabei bevorzugt in die Poren der Schaumstruktur eingebaut. Der Einbau in die Poren wird durch ein mehrstufiges Herstellverfahren erreicht, bei dem in einem ersten Schritt der Melamin/Formaldehyd-Schaumstoff hergestellt und in einem zweiten, zusätzlichen Imprägnierschritt die Mikrohohlkugeln in den Schaumstoff eingebracht werden.

Aufgabe der Erfindung war es, ausgehend von einem Melamin/Formaldehyd-Vorkondensat mit einem Molverhältnis Formaldehyd : Melamin größer als 2, einen entsprechenden thermoverformbaren Melamin/Formaldehyd-Schaumstoff bereitzustellen, der neben guten mechanischen Eigenschaften gleichzeitig, bevorzugt bereits vor dem Thermoformen zu Formteilen, geringe Formaldehyd-Emissionen von beispielsweise weniger als 0,1 ppm zeigt. Eine weitere Aufgabe der vorliegenden Erfindung ist es, ein Verfahren zur Herstellung dieses thermoverformbaren Schaumstoffes bzw. zur Herstellung von entsprechenden Formteilen bereitzustellen.

Diese Aufgaben werden erfindungsgemäß gelöst durch einen thermoverformbaren Melamin-/Formaldehyd-Schaumstoff, enthaltend 0,1 bis 50 Gew.-% wenigstens eines partikelförmigen Füllmaterials, wobei die Gew.-% auf das Gesamtgewicht aus zur Schaumstoffherstellung eingesetztem Melamin-/Formaldehyd-Vorkondensat und Füllmaterial bezogen sind, wobei das wenigstens eine partikelförmige Füllmaterial einen Schmelzpunkt von höchstens 220 °C aufweist. Die erfindungsgemäßen thermoverformbaren Melamin-/Formaldehyd-Schaumstoffe enthalten 0,1 bis 50 Gew. %, bevorzugt 1 bis 40 Gew. %, besonders bevorzugt 5 bis 35 Gew. %, ganz besonders bevorzugt 10 bis 30 Gew.% eines oder mehrerer, also 1 bis 10, bevorzugt 1 bis 5, besonders bevorzugt 1 bis 3, insbesondere 1 oder 2, ganz besonders bevorzugt 1 partikelförmiger Füllmaterialien, wobei die Gew.-% jeweils auf das Gesamtgewicht aus zur Schaumstoffherstellung eingesetztem Melamin-/Formaldehyd-Vorkondensat und partikelförmigen Füllmaterial bezogen sind.

Die partikelförmigen Füllmaterialien haben erfindungsgemäß bevorzugt einen mittleren Teilchendurchmesser von 5 µm bis 750 µm, bevorzugt 50 bis 600 µm, besonders bevorzugt 100 bis 500 µm (d₅₀-Wert, zahlengemittelt, bestimmt mittels Licht-oder Elektronenmikroskopie in Verbindung mit Bildauswertung). Die Teilchengrößenverteilung der partikelförmigen Füllmaterialien kann mono-, bi- oder multimodal sein.

Die vorliegende Erfindung betrifft daher bevorzugt den erfindungsgemäßen thermoverformbaren Melamin-/Formaldehyd-Schaumstoff, wobei das wenigstens eine partikelförmige Füllmaterial einen mittleren Teilchendurchmesser von 5 µm bis 750 µm, bevorzugt 50 µm bis 600 µm, besonders bevorzugt 100 µm bis 500 µm (d₅₀-Wert, zahlengemittelt, bestimmt mittels Licht-oder Elektronenmikroskopie in Verbindung mit Bildauswertung), aufweist.

Die einzelnen Partikel der partikelförmigen Füllmaterialien können selbst aus kleineren agglomerierten Teilchen, welche oftmals als Primärpartikel bezeichnet werden, aufgebaut sein. Beispielsweise können die partikelförmigen Füllmaterialien in Form von Agglomerat-Partikeln mit den vorstehend beschriebenen Teilchendurchmessern eingesetzt werden, wobei jedes Agglomerat aus kleineren Primärpartikeln besteht. Solche in Agglomeratform vorliegenden Partikel sind dem Fachmann grundsätzlich bekannt und in der Literatur beschrieben. Sie lassen sich beispielsweise durch Zugabe von Agglomerisierungshilfsmitteln zu den Primärpartikeln und anschließendes Vermischen erhalten.

Die Füllmaterialien liegen erfindungsgemäß in Partikelform vor, bevorzugt liegt das Verhältnis der längsten Raumachse zur kürzesten Raumachse der Partikel im Bereich von 4:1 bis 1:1, besonders bevorzugt sind sphärische Füllmaterialien.

Als partikelförmige Füllmaterialien kommen grundsätzlich alle Stoffe in Betracht, bevorzugt dem Fachmann bekannte und in der Literatur beschriebene organische Oligomere und Polymere.

Die vorliegende Erfindung betrifft daher bevorzugt den erfindungsgemäßen thermoverformbaren Melamin-/Formaldehyd-Schaumstoff, wobei als wenigstens ein partikelförmiges Füllmaterial organische Oligomere oder Polymere eingesetzt werden.

Die erfindungsgemäß bevorzugt als partikelförmige Füllmaterialien eingesetzten organischen Oligomere oder Polymere weisen ein Molekulargewicht von beispielsweise 1000 bis 1.000.000 g/mol, bevorzugt 1.000 bis 100.000 g/mol, besonders bevorzugt 2.000 bis 50.000 g/mol, insbesondere 2.000 bis 20.000 g/mol, auf.

Die erfindungsgemäß eingesetzten partikelförmigen Füllmaterialien weisen einen Schmelzpunkt von höchstens 220 °C, bevorzugt höchstens 200 °C, besonders bevorzugt höchstens 180 °C, auf. Die erfindungsgemäß eingesetzten partikelförmigen Füllmaterialien weisen im Allgemeinen einen Schmelzpunkt von wenigstens 100 °C auf.

In einer besonders bevorzugten Ausführungsform des erfindungsgemäßen thermoverformbaren Melamin-/Formaldehyd-Schaumstoffes weist das wenigstens eine partikelförmige Füllmaterial einen mittleren Teilchendurchmesser von 5 µm bis 750 µm, bevorzugt 50 µm bis 600 µm, besonders bevorzugt 100 µm bis 500 µm (d₅₀-Wert, zahlengemittelt, bestimmt mittels Licht- oder Elektronenmikroskopie in Verbindung mit Bildauswertung), und einen Schmelzpunkt von höchstens 220 °C, bevorzugt höchstens 200 °C, besonders bevorzugt höchstens 180 °C, auf.

Der erfindungsgemäß wesentliche Schmelzpunkt, insbesondere in Kombination mit den erfindungsgemäß bevorzugten Partikelgrößen, des wenigstens einen partikelförmigen Füllmaterials, bevorzugt der organischen Oligomere oder Polymere, führt zu einem Aufschmelzen der Polymerpartikel während des Thermoformprozesses, so dass erfindungsgemäß ein thermoverformbarer Melamin/Formaldehyd-Schaumstoff aus einem nicht thermoformbaren Duroplasten erhalten wird, der eine sehr gute Thermoformbarkeit aufweist und nach dem Thermoverformen, eine besonders vorteilhafte Kombination aus hoher Randlippenfestigkeit, guten mechanischen Eigenschaften und niedrigen Formaldehydemission aufweist

Entsprechend geeignete organische Oligomere und Polymere mit einem erfindungsgemäß geeigneten Schmelzpunkt von höchstens 220 °C sind beispielsweise ausgewählt aus der Gruppe bestehend aus Polyethylen, beispielsweise LDPE-Wachs, Polypropylen, Polystyrol, Polyestern, Polcarbonaten, Polyamiden, thermoplastischen Elastomeren, beispielsweise thermoplastisches Polyurethan, und Mischungen davon.

In Ullmann's Encyclopedia of Industrial Chemistry (Wiley) finden sich folgende Kapitel zu den genannten thermoplastischen Materialien: a) Polyethylene, Edition 6, Vol. 28, 2003, S. 393 - 427; b) Polypropylene, Edition 6, Vol. 28, 2003, S. 428 - 461; c) Polyesters, Edition 6, Vol. 28, 2003, S. 75 -102; d) Polycarbonates, Edition 6, Vol. 28, 2003, S. 55 - 63; e) Polyamides, Edition 6, Vol. 28, 2003, S. 25 - 54; f) Polyurethanes: Edition 6, Vol. 28, 2003, S. 667 - 722; g) Polystyrene and Styrene Copolymers, Edition 6, Vol. 28, 2003, S. 455 - 488 und h) Thermoplastic Elastomers, Edition 6, Vol. 36, 2003, S. 667 - 722.

Erfindungsgemäß besonders bevorzugt sind partikelförmige Füllmaterialien, die aufgrund ihres Schmelzpunktes von höchstens 220 °C im Thermoverformungsschritt aufschmelzen, eine niedrige Fließviskosität aufweisen und eine gleichmäßige Beschichtung der dreidimensionalen, offenzelligen Stegstruktur erlauben.

Als besonders bevorzugtes Beispiel sei LDPE-(Low Density Polyethylene)-Wachs, erhältlich unter dem Handelsnamen LUWAX A von der BASF SE, insbesondere mit einem mittleren Teilchendurchmesser von 50 bis 600 µm, beispielsweise 0,42 mm, (jeweils d₅₀-Wert, zahlengemittelt, bestimmt mittels Licht- oder Elektronenmikroskopie in Verbindung mit Bildauswertung), erwähnt.

Bei den erfindungsgemäßen Melamin/-Formaldehyd-Schaumstoffen handelt es sich im Allgemeinen um ein offenzelliges Schaumstoffgerüst, welches eine Vielzahl miteinander verbundener, dreidimensional verzweigter Stege enthält und bei denen die partikelförmigen Füllstoffe bevorzugt in die Porenstruktur eingebettet sind. Die Partikelgröße entspricht vorzugsweise dem mittleren Porendurchmesser der Schaumstruktur, wobei dieser mittlere Porendurchmesser bevorzugt im Bereich von 10 µm bis 1000 µm, insbesondere im Bereich von 50 µm bis 600 µm liegt (d₅₀-Wert, zahlengemittelt, bestimmt mittels Licht-oder Elektronenmikroskopie in Verbindung mit Bildauswertung). Die partikelförmigen Füllstoffe können somit in idealer Weise in die Porenstruktur des offenzelligen Schaumstoffs eingebunden und von allen Seiten des Porengerüstes fixiert werden. Eine derartige Struktur kann durch nachträgliches Imprägnieren des Schaumstoffs mit Füllmaterialien nicht erzeugt werden, da hierfür die Teilchengröße der Füllstoffe immer so gewählt werden muss, dass die Teilchengröße kleiner als die Porengröße des Schaumstoffs ist, um eine Verteilung im gesamten Schaumstoff zu gewährleisten.

Die vorliegende Erfindung betrifft daher bevorzugt den erfindungsgemäßen thermoverformbaren Melamin-/Formaldehyd-Schaumstoff, wobei das wenigstens eine partikelförmige Füllmaterial in die Porenstruktur des Schaumstoffs eingebettet ist und der mittlere Teilchendurchmesser dem mittleren Porendurchmesser der Schaumstruktur entspricht.

Die zur Herstellung der erfindungsgemäßen Melamin-Formaldehyd-Schaumstoffe eingesetzten Melamin-Formaldehyd-Vorkondensate weisen in der Regel ein Molverhältnis von Formaldehyd zu Melamin größer 2, bevorzugt 2,5:1 bis 3,5:1 auf.

Diese Melamin/Formaldehyd-Kondensationsprodukte können neben Melamin 0 bis 50 Gew.-%, bevorzugt 0 bis 40 Gew.-%, besonders bevorzugt 0 bis 30 Gew.-%, insbesondere 0 bis 20 Gew.-%, jeweils bezogen auf das Melamin-/Formaldehyd-Vorkondensat,, anderer Duroplastbildner und neben Formaldehyd 0 bis 50 Gew.-%, bevorzugt 0 bis 40 Gew.-%, besonders bevorzugt 0 bis 30 Gew.-%, insbesondere 0 bis 20 Gew.-%, jeweils bezogen auf das Melamin-/Formaldehyd-Vorkondensat, anderer Aldehyde ein kondensiert enthalten. Bevorzugt sind unmodifizierte Melamin/Formaldehyd-Vorkondensate.

Als Duroplastbildner eignen sich beispielsweise alkyl- und arylsubstituiertes Melamin, Harnstoff, Urethane, Carbonsäureamide, Dicyandiamid, Guanidin, Sulfurylamid, Sulfonsäureamide, aliphatische Amine, Glykole, Phenol oder deren Derivate.

Als Aldehyde eignen sich beispielsweise Acetaldehyd, Trimethylolacetaldehyd, Acrolein, Benza-Idehyd, Furfural, Glyoxal, Glutaraldehyd, Phthalaldehyd, Terephthalaldehyd oder deren Gemische. Weitere Einzelheiten über Melamin/Formaldehyd-Kondensationsprodukte finden sich in Houben-Weyl, Methoden der organischen Chemie, Band 14/2, 1963, Seiten 319 bis 402.

Die vorliegende Erfindung betrifft des Weiteren den erfindungsgemäßen Melamin-/Formaldehyd-Schaumstoff, wobei dieser eine Formaldehydemission, gemessen nach DIN 55666, von 0,1 ppm oder weniger aufweist.

Die erfindungsgemäßen Melamin-/Formaldehyd-Schaumstoffe lassen sich wie folgt herstellen:
Die partikelförmigen Füllmaterialien können bereits vor und/oder während der Harzsynthese aus Melamin und Formaldehyd, bevorzugt jedoch dem vorgefertigten Melamin/Formaldehyd-Kondensat vor und/oder während des Schäumprozesses, zugefügt werden.

Bevorzugt können ein Melamin-Formaldehyd-Vorkondensat und ein Lösungsmittel mit einer Säure, einem Dispergiermittel, einem Treibmittel und wenigstens einem entsprechenden partikelförmigem Füllmaterial bei Temperaturen oberhalb der Siedetemperatur des Treibmittels verschäumt, getrocknet und anschließend werden.

Die vorliegende Erfindung betrifft daher des Weiteren ein Verfahren zur Herstellung eines erfindungsgemäßen thermoverformbaren Melamin-/Formaldehyd-Schaumstoffes, wobei wenigstens ein Melamin-Formaldehyd-Vorkondensat in einem Lösungsmittel mit einer Säure, einem Dispergiermittel, einem Treibmittel und wenigstens einem partikelförmigen Füllmaterial bei Temperaturen oberhalb der Siedetemperatur des Treibmittels verschäumt, getrocknet und anschließend bei einer Temperatur oberhalb von 200°C getempert wird.

Als Melamin-/Formaldehyd-Vorkondensate eignen sich eigens hergestellte, siehe dazu folgende Übersichtsschriften: a) W. Woebcken, Kunststoffhandbuch 10. Duroplaste, München, Wien 1988, b) Encyclopedia of Polymer Science and Technology, 3. Aufl., Vol.1, Kap. Amino Resins, S. 340 bis 370, 2003 c) Ullmann's Encyclopedia of Industrial Chemistry, 6. Aufl., Vol. 2, Kap. Amino Resins, S. 537 bis 565. Weinheim 2003, oder handelsübliche Vorkondensate der beiden Komponenten Melamin und Formaldehyd. Die Melamin-Formaldehyd-Vorkondensate weisen in der Regel ein Molverhältnis von Formaldehyd zu Melamin größer 2, bevorzugt 2,5 : 1 bis 3,5 : 1 auf.

Eine bevorzugte Verfahrensvariante zur Herstellung des erfindungsgemäßen thermoverformbaren Melamin/Formaldehyd-Schaumstoffes umfasst die Stufen:
(1) Herstellen einer Suspension enthaltend ein Melamin/Formaldehyd-Vorkondensat des herzustellenden Schaumstoffs, entsprechende partikelförmige Füllstoffe und gegebenenfalls weitere Zusatzkomponenten,
(2) Aufschäumen des Vorkondensates durch Erhitzen der Suspension aus Schritt (1) auf eine Temperatur oberhalb der Siedetemperatur des Treibmittels,
(3) Trocknen und Tempern des aus Schritt (2) erhaltenen Schaumstoffs.

Die vorliegende Erfindung betrifft auch des Weiteren ein Verfahren zur Herstellung von Formteilen durch Thermoformen eines erfindungsgemäßen thermoverformbaren Schaumstoffs.

Bevorzugt wird zur Herstellung eines Formteils aus dem erfindungsgemäßen thermoverformbaren Melamin/Formaldehyd-Schaumstoff der in Schritt (3) des oben genannten Verfahrens erhaltene Schaumstoff in Schritt (4) überführt:
(4) Thermoverformung des aus Schritt (3) erhaltenen Schaumstoffs.

Das erfindungsgemäße Verfahren zur Herstellung eines Formteils umfasst daher bevorzugt die Schritte (1), (2), (3) und (4).

Die einzelnen Schritte des erfindungsgemäßen Verfahrens und die verschiedenen Variationsmöglichkeiten werden nachfolgend näher ausgeführt.

Es können bei der Herstellung des Melamin-/Formaldehyd-Vorkondensates in Schritt (1) Alkohole, beispielsweise Methanol, Ethanol oder Butanol zugesetzt werden, um teilweise oder vollständig veretherte Kondensate zu erhalten. Durch die Bildung der Ethergruppen können die Löslichkeit des Melamin-/Formaldehyd-Vorkondensates und die mechanischen Eigenschaften des vollständig ausgehärteten Materials beeinflusst werden.

Als Dispergiermittel bzw. Emulgator können anionische, kationische und nicht ionische Tenside sowie Mischungen davon eingesetzt werden.

Geeignete anionische Tenside sind beispielsweise ausgewählt aus der Gruppe bestehend aus Diphenylenoxidsulfonat, Alkan- und Alkylbenzolsulfonaten, Alkylnaphthalinsulfonaten, Olefinsulfonaten, Alkylethersulfonaten, Fettalkohol-sulfaten, Ethersulfaten, α-Sulfofettsäureestern, Acylaminoalkansulfonaten, Acylisothionaten, Alkylethercarboxylaten, N-Acylsarcosinaten, Alkyl-und Alkylether-phosphaten und Mischungen davon.

Geeignete nicht ionische Tenside sind beispielsweise ausgewählt aus der Gruppe bestehend aus Alkylphenolpolyglykolethern, Fettalkoholpolyglykolethern, Fettsäurepolyglykolethern, Fettsäurealkanolamiden, Ethylenoxid/-Propylenoxid-Blockcopolymeren, Aminoxiden, Glycerinfettsäureestern, Sorbitanestern, Alkylpolyglykosiden und Mischungen davon.

Geeignete kationische Emulgatoren sind beispielsweise ausgewählt aus der Gruppe bestehend aus Alkyltriammoniumsalzen, Alkylbenzyldimethylammoniumsalzen, Alkylpyridiniumsalzen und Mischungen davon.

Die Dispergiermittel bzw. Emulgatoren können in Mengen von 0,2 bis 5 Gew.-%, bezogen auf das Melamin-/Formaldehyd-Vorkondensat, eingesetzt werden.

Die Dispergiermittel bzw. Emulgatoren und/oder Schutzkolloide können im Prinzip zu einem beliebigen Zeitpunkt zur Rohdispersion gegeben werden.

Abhängig von der Wahl des Melamin-/Formaldehyd-Vorkondensates enthält die Mischung ein Treibmittel. Dabei richtet sich die Menge des Treibmittels in der Mischung in der Regel nach der erwünschten Dichte des Schaumstoffs.

Als Treibmittel eignen sich "physikalische" oder "chemische" Treibmittel, siehe Encyclopedia of Polymer Science and Technology, Vol. I, 3. Aufl., Kapitel Additives, Seite 203 bis 218, 2003.

Als "physikalische" Treibmittel eignen sich beispielsweise Kohlenwasserstoffe, wie Pentan, Hexan, halogenierte, insbesondere chlorierte und/oder fluorierte, Kohlenwasserstoffe, beispielsweise Methylenchlorid, Chloroform, Trichlorethan, Fluorchlorkohlenwasserstoffe, teilhalogenierte Fluorchlorkohlenwasserstoffe (H-FCKW), Alkohole, beispielsweise Methanol, Ethanol, n- oder iso-Propanol, Ether, Ketone und Ester, beispielsweise Ameisensäuremethylester, Ameisensäureethylester, Essigsäuremethylester oder Essigsäureethylester in flüssiger Form oder Luft, Stickstoff oder Kohlendioxid als Gase.

Als "chemische" Treibmittel eignen sich beispielsweise Isocyanate im Gemisch mit Wasser, wobei als wirksames Treibmittel Kohlendioxid freigesetzt wird. Ferner sind Carbonate und Bicarbonate im Gemisch mit Säuren geeignet, welche ebenfalls Kohlendioxid erzeugen. Auch geeignet sind Azoverbindungen, beispielsweise Azodicarbonamid.

Gemäß der vorliegenden Erfindung enthält die Mischung im Allgemeinen wenigstens ein Treibmittel in einer Menge von 0,5 bis 60 Gew.-%, bevorzugt 1 bis 40 Gew.-%, besonders bevorzugt 1,5 bis 30 Gew.-% bezogen auf das Melamin-/Formaldehyd-Vorkondensat.

Erfindungsgemäß bevorzugt wird ein physikalisches Treibmittel mit einem Siedepunkt zwischen 0 und 80 °C zugesetzt.

Als Härter können Säuren eingesetzt werden, die die Weiterkondensation des Melaminharzes katalysieren. Die Menge dieser Härter beträgt in der Regel 0,01 bis 20 Gew.-%, bevorzugt 0,05 und 5 Gew.-%, jeweils bezogen auf das Vorkondensat. Geeignete Säuren sind anorganische und organische Säuren, zum Beispiel ausgewählt aus der Gruppe bestehend aus Salzsäure, Schwefelsäure, Phosphorsäure, Salpetersäure, Ameisensäure, Essigsäure, Oxalsäure, Toluolsulfonsäuren, Amidosulfonsäuren, Säureanhydride und Mischungen davon.

In einer weiteren Ausführungsform enthält die Mischung neben dem Melamin-/Formaldehyd-Vorkondensat des herzustellenden Schaumstoffes und den entsprechenden Füllmaterialien auch einen Emulgator sowie gegebenenfalls einen Härter und gegebenenfalls ein Treibmittel. In einer weiteren Ausführungsform ist die Mischung frei von weiteren Zusatzstoffen. Für manche Zwecke kann es jedoch günstig sein, 0,1 bis 20 Gew.-%, bevorzugt 0,1 bis 10 Gew.%, bezogen auf das Melamin-/Formaldehyd-Vorkondensat, an üblichen, von den partikelförmigen Füllmaterialien verschiedenen Zusatzstoffen, beispielsweise Fasern, Farbstoffe, Flammschutzmittel, UV-Stabilisatoren, Mittel zur Herabsetzung der Brandgastoxizität oder zur Förderung der Verkohlung, Duftstoffe, optische Aufheller oder Pigmente zuzusetzen. Diese Zusatzstoffe sind bevorzugt homogen in dem Schaumstoff verteilt.

Als Farbstoffe werden bevorzugt wasserlösliche Farbstoffe, beispielsweise Metallkomplexfarbstoffe, eingesetzt. Diese Farbstoffe können zuvor mit den Füllmaterialien vermengt werden.

Im nachfolgenden Schritt (2) des erfindungsgemäßen Verfahrens erfolgt das Aufschäumen des Vorkondensates im Allgemeinen durch Erhitzen der Suspension des Melamin-/Formaldehyd-Vorkondensates und des wenigstens einen partikelförmigen Füllmaterials aus Schritt (1), um einen Schaumstoff zu erhalten, der das wenigstens eine partikelförmige Füllmaterial enthält. Dazu wird die Suspension in der Regel auf eine Temperatur oberhalb des Siedepunktes des verwendeten Treibmittels erwärmt und in einer geschlossenen Form verschäumt.

Bevorzugt kann der Energieeintrag durch elektromagnetische Strahlung erfolgen, beispielsweise durch Hochfrequenzbestrahlung mit 5 bis 400 kW, bevorzugt 5 bis 200 kW, besonders bevorzugt 9 bis 120 kW, jeweils pro Kilogramm der eingesetzten Mischung in einem Frequenzbereich von 0,2 bis 100 GHz, bevorzugt 0,5 bis 10 GHz. Als Strahlungsquelle für dielektrische Strahlung sind Magnetrone geeignet, wobei mit einem oder mehreren Magnetronen gleichzeitig bestrahlt werden kann.

In Schritt (3) des erfindungsgemäßen Verfahrens wird der in Schritt (2) erhaltene Schaumstoff bei einer Temperatur oberhalb 200 °C getempert. Bevorzugt beträgt die Tempertemperatur 200 bis 280 °C, insbesondere 220 bis 260 °C. Beim Tempern findet eine sog. Nachhärtung statt, d. h., dass der Schaumstoff weiter aushärtet. Außerdem können durch das Tempern Reste flüchtiger Inhaltsstoffe, beispielsweise Monomerreste, Treibmittel und sonstige Hilfsmittel, weitgehend entfernt werden.

Die Dichte des thermoverformbaren Schaumstoffs beträgt im Allgemeinen 3 bis 50 kg/m³, bevorzugt 5 bis 40 kg/m³, besonders bevorzugt 8 bis 30 kg/m³, insbesondere bevorzugt 10 bis 25 kg/m³.

In Schritt (4) des erfindungsgemäßen Verfahrens wird der in Schritt (3) erhaltene, getemperte Schaumstoff, bevorzugt in einer Presse, thermoverformt, d. h. verpresst.

Schritt (4) des erfindungsgemäßen Verfahrens erfolgt im Allgemeinen bei einer Temperatur von 160 bis 240 °C, vorzugsweise 170 bis 210 °C. Schritt (4) des erfindungsgemäßen Verfahrens erfolgt im Allgemeinen bei einem Absolutdruck im Presswerkzeug von 0,001 bis 100 bar, vorzugsweise 0,02 bis 1 bar.

Das Thermoverformen gemäß Schritt (4) des erfindungsgemäßen Verfahrens erfolgt im Allgemeinen innerhalb von 15 bis 120 sec.

Besonders bevorzugt wird in Schritt (4) des erfindungsgemäßen Verfahrens bei einer Temperatur (Presstemperatur) von 180 bis 200 °C, und einem Absolutdruck (Pressdruck) von 0,03 bis 0,5 bar verpresst. Die besonders bevorzugte Presszeit beträgt 30 bis 60 sec.

Die Konturgenauigkeit wird in dem erfindungsgemäßen Verfahren optional dadurch verbessert, dass das noch geschlossene Presswerkzeug nach der Hochtemperaturphase mittels geeigneter Kühlmedien abgekühlt wird. Die dazu erforderlichen Kühlkanäle können äquidistant zur Werkzeugkavität angeordnet werden, oder beispielsweise bei Bauteilen mit unterschiedlichen Dicken in den Bereichen größerer Bauteildicken vorzugsweise näher und in den Bereichen kleiner Bauteildicken in größeren Abständen zur Kavität angesiedelt werden. Als Kühlmedien eignen sich Wasser bei Werkzeugtemperaturen < 100 °C bzw. Öle bei Temperaturen >100 °C.

Die im Einzelfall zu wählenden Presstemperaturen,-drücke und -zeiten richten sich in üblicher Weise nach der Zusammensetzung des Schaums, beispielsweise nach Art und Menge des Härters, und nach der Dichte, Dicke und Härte des zu verpressenden Schaums, beispielsweise auch nach der Vorbehandlung des Schaums, zu der auch das Tempern in Schritt (3) gehört. Außerdem sind u.a. die Dichte, Dicke, Gestalt und Härte des gewünschten Formteils, und ggf. vorhandene Kaschierungen bzw. Deckschichten, siehe unten, zu berücksichtigen. Presstemperatur, -druck und -zeit sind bevorzugt derart einzustellen, dass das in Schritt (4) erhaltene Formteil im Wesentlichen bereits die gewünschte, endgültige Raumform aufweist.

Dabei erfordern möglicherweise Formteile mit großer Fläche bzw. großem Volumen eine längere Presszeit als kleinere Formteile. Außerdem kann der Pressdruck ggf. umso höher und/oder die Presszeit umso länger sein, je härter bzw. dicker der getemperte Schaum ist, und höher die gewünschte Dichte des fertigen Formteils sein soll. Presstemperatur und Pressdruck können über die gesamte Presszeit konstant sein, oder in geeigneter Weise variiert werden. Im Allgemeinen wird bei konstanten Bedingungen verpresst, jedoch können insbesondere bei großen oder kompliziert geformten Teilen auch Temperatur- oder Druckprogramme vorteilhaft sein.

Das Thermoverformen, d. h. Verpressen, gemäß Schritt (4) geschieht in üblicher Weise und bevorzugt diskontinuierlich, indem man den in Schritt (3) des erfindungsgemäßen Verfahrens erhaltenen getemperten Schaumstoff - bevorzugt als Schaumstoffplatte, -schicht bzw. -zuschnitt - in eine geeignete Presse einlegt und verpresst. Die Pressform (das Presswerkzeug) ist in der Regel temperierbar, beispielsweise durch elektrische Beheizung oder Beheizung mittels eines Wärmeträgermediums, und die Presse ist üblicherweise mit einer Auswurfvorrichtung versehen. Gut geeignet als Pressform sind sog. Konturwerkzeuge, mit denen sich besonders gut solche Formteile herstellen lassen, die präzise geformte Kanten bzw. Ränder, beispielsweise profilierte Kanten oder Randlippen, aufweisen sollen.

Geeignete Pressen sind beispielsweise dem Fachmann bekannte Vorrichtungen, beispielsweise übliche Etagenpressen (Ein- oder Mehretagenpressen), Kniehebelpressen, Oberdruckpressen, Spritzpressen (Transferpressen), Unterdruckpressen, sowie Pressautomaten. Nach dem Verpressen wird üblicherweise die Presse geöffnet und das fertige Formteil mit einer Auswurfvorrichtung aus der Presse entfernt. Bei dem beschriebenen Verfahren entstehen Schaumstoffblöcke bzw. -platten, die zu beliebigen Formen zurechtgeschnitten werden können.

Die Formteile können als solche verwendet werden, d. h. mit unbehandelten, insbesondere unkaschierten Oberflächen. In einer bevorzugten Ausführungsform sind eine oder mehrere Formteiloberflächen mit Deckschichten versehen oder kaschiert, beispielsweise mit Glasfaser- oder Textilschichten, insbesondere Vliesen oder Geweben, Metallblechen, -geweben oder -folien, Kunststoffschichten, -geweben, -vliesen oder -folien, die auch geschäumt sein können. Als Textilschichten sind Faservliese bzw. Fasergewebe auf Basis von Glasfasern, Polyesterfasern , Carbonfasern, Aramidfasern, oder flammwidrig ausgerüstete Naturfasern verwendbar.

Die Deckschicht bzw. Kaschierung kann in üblicher Weise auf die Formteiloberfläche aufgebracht werden, beispielsweise durch Verkleben mit dazu geeigneten Klebern, insbesondere bei Vliesen und Geweben auch durch Vernähen, Versteppen, Tackern, Nadeln oder Vernieten. Man kann die Deckschicht bzw. Kaschierung nachträglich auf das fertige Formteil aufbringen, oder - bevorzugt - bereits bei der Herstellung des Formteils anbringen. Beispielsweise kann man beim Verpressen des Schaumstoffs in Schritt (4), den Schaumstoff mit entsprechenden Deckschichten bzw. Kaschierungen abdecken und danach verpressen. Man kann auch die Deckschichten bzw. Kaschierungen in die Pressform einlegen und mit dem Schaumstoff verpressen. Soll beispielsweise ein flächiges Formteil auf seiner Unterseite mit einem Vlies A und auf seiner Oberseite mit einem Vlies B kaschiert werden, so kann man die Schichten in der Reihenfolge A-S-B anordnen und anschließend verpressen (S = Schaumstoffschicht), wodurch in einem Arbeitsgang das beidseitig kaschierte Formteil entsteht.

Es versteht sich, dass auch mehrschichtige Kaschierungen möglich sind, beispielsweise durch sukzessives Aufbringen weiterer Schichten auf das fertige Formteil oder bereits bei der Formteilherstellung durch Verpressen aufeinanderliegender Schichten, die zuvor in der gewünschten Reihenfolge angeordnet wurden. Natürlich kann man auch eine erste Kaschierung beim Verpressen, und eine zusätzliche Kaschierung nachträglich anbringen. Besonders bevorzugt sind eine oder mehrere Formteiloberflächen mit einer hydrophoben oder oleophoben Textilschicht kaschiert.

Als hydrophobe Textilschicht eignen sich beispielsweise Glasfasern, Polyesterfasern oder Polyamidfasern, die mit Paraffin-, Silikon- oder Fluoralkanemulsionen hydrophob ausgerüstet sind. Als oleophobe Textilschicht kommen beispielsweise Glasfasern, Polyesterfasern oder Polyamidfasern, die mit Fluoralkanemulsionen oleophob ausgerüstet sind, in Betracht.

Der nach dem erfindungsgemäßen Verfahren erhältliche Melamin-/Formaldehyd-Schaumstoff hat bevorzugt eine offenzellige Struktur mit einer Offenzelligkeit, gemessen nach DIN ISO 4590, von mehr als 50%, insbesondere mehr als 80%.

Der mittlere Porendurchmesser liegt bevorzugt im Bereich von 10 bis 1000 µm, insbesondere im Bereich von 50 bis 600 µm.

Der erfindungsgemäße Schaumstoff ist bevorzugt elastisch.

Der nach dem erfindungsgemäßen Verfahren erhältliche Melamin-/Formaldehyd-Schaumstoff kann auf vielfältige Weise zur Wärme- und Schalldämmung im Bauwesen und im Automobil-, Schiffs- und Schienenfahrzeugbau, dem Bau von Raumfahrzeugen oder in der Polsterindustrie eingesetzt werden, beispielsweise zur Wärmedämmung im Hausbau oder als schalldämmendes Material, beispielsweise in Automobilen, Flugzeugen, Bahnen, Schiffen, etc. in Fahrtgastzellen oder im Motorraum oder zur Bepolsterung von Sitz- und Liegeflächen sowie für Rücken-und Armlehnen. Vorzugsweise liegen Anwendungsfelder in Bereichen, die eine hohe Temperaturstabilität und geringe Entflammbarkeit voraussetzen, beispielsweise in Porenbrennern.

Die vorliegende Erfindung betrifft daher auch die Die Verwendung eines erfindungsgemäßen Melamin-/Formaldehyd-Schaumstoffes zur akustischen oder thermischen Isolierung im Bauwesen, im Automobil-, Schiffs- und Schienenfahrzeugbau, dem Bau von Raumfahrzeugen, in der Polsterindustrie oder zur Isolierung von Rohrleitungen.

Für bestimmte Anwendungsbereiche kann es vorteilhaft sein, die Oberfläche der erfindungsgemäßen Schaumstoffe mit einer dem Fachmann grundsätzlich bekannten Kaschierung oder Laminierung zu versehen. Solche Kaschierungen oder Laminierungen können beispielsweise unter weitgehender Erhaltung der akustischen Eigenschaften mit sogenannten "offenen" Systemen, wie beispielweise Lochplatten erfolgen, oder aber auch mit "geschlossenen" Systemen, beispielsweise Folien oder Platten aus Kunststoff, Metall oder Holz, insbesondere wie oben genannt.

Die erfindungsgemäßen Melamin-/Formaldehyd-Schaumstoffe, die 0,01 bis 50 Gew.-% wenigstens eines partikelförmigen Füllmaterials enthalten, können zur Thermokomprimierung eingesetzt werden.

### Beispiele:

Die im Folgenden genannten Stempeldruckmessungen zur Beurteilung der mechanischen Güte der Melaminharzschaumstoffe erfolgten nach US 4,666,948 A. Dazu wurde ein zylindrischer Stempel mit einem Durchmesser von 8 mm und einer Höhe von 10 cm in eine zylindrische Probe mit dem Durchmesser von 11 cm und einer Höhe von 5 cm in Schäumrichtung bei einem Winkel von 90° gedrückt, bis die Probe riss. Die Durchreißkraft [N], im Folgenden auch Stempeldruckwert genannt, gibt Auskunft über die mechanische Güte des Schaumstoffs.

### Vergleichsbeispiel V-A

Herstellung eines Melamin-/Formaldehyd-Schaumstoffes mit einem Melamin-/Formaldehyd-Vorkondensat (Molverhältnis 1 : 3,0) ohne Füllmaterialien

75 Gew.-Teile eines sprühgetrockneten Melamin-/Formaldehyd-Vorkondensates (Mol-verhältnis 1:3) wurden in 25 Gew.-Teilen Wasser gelöst, 3 Gew.-% Ameisensäure, 2 Gew.-% eines Na-C₁₂/C₁₄-Alkylsulfats, 20 Gew.-% Pentan, wobei die Gew.-% jeweils bezogen sind auf das Vorkondensat, wurden zugesetzt, anschließend gerührt und dann in einer Form aus Polypropylen (zum Schäumen) durch Einstrahlung von Mikrowellenenergie verschäumt. Nach dem Verschäumen wurde 30 Minuten getrocknet und anschließend im Heißluftgebläse bei 220 °C für 10 min getempert.

Der erhaltene Melamin-/Formaldehyd-Schaumstoff hat eine Dichte von 7,2 g/l und einen Stempeldruckwert von 19,9 N.

### Vergleichsbeispiel V-B

Herstellung eines Melamin-/Formaldehyd-Schaumstoffes mit 25 Gew.-% Low Density Polyethylen-Wachs (LDPE-Wachs), bezogen auf das Gesamtgewicht aus zur Schaumstoffherstellung eingesetztem Melamin-/Formaldehyd-Vorkondensat und partikelförmigen Füllmaterial als Füllmaterial.

75 Gew.-Teile eines sprühgetrockneten Melamin-/Formaldehyd-Vorkondensates (Mol-verhältnis 1:3) wurden in 25 Gew.-Teilen Wasser gelöst, 3 Gew.-% Ameisensäure, 2 Gew.-% eines Na-C₁₂/C₁₄-Alkylsulfats, 20 Gew.-% Pentan, wobei die Gew.-% jeweils bezogen sind auf das Vorkondensat, und 25 Gew.-Teile LDPE-Wachs, gemahlen aus Luwax A Granulat, Korngröße: 0,8 bis 1,2 mm, mittlerer Teilchendurchmesser 1,0 mm (d₅₀-Wert, zahlengemittelt, bestimmt mittels Licht-oder Elektronenmikroskopie in Verbindung mit Bildauswertung), Schmelzpunkt: 101-109°C (DIN 51007, DSC) wurden zugesetzt, anschließend gerührt und dann in einer Form aus Polypropylen (zum Schäumen) durch Einstrahlung von Mikrowellenenergie verschäumt. Nach dem Verschäumen wurde 30 Minuten getrocknet und anschließend im Heißluftgebläse bei 220 °C für 10 min getempert.

Der erhaltene Melamin-/Formaldehyd-Schaumstoff hat eine Dichte von 10,1 g/l und einen Stempeldruckwert von 19,7 N.

### Vergleichsbeispiel V-C

Herstellung eines Melamin-/Formaldehyd-Schaumstoffes mit einem Melamin-/Formaldehyd-Vorkondensat (Molverhältnis 1 : 1,6) ohne Füllmaterialien

70 Gew.-Teile eines sprühgetrockneten Melamin/Formaldehyd-Vorkondensats (Molverhältnis 1 : 1,6) und 5,25 Gew.-Teile Harnstoff werden in Wasser gelöst. Dieser Harzlösung werden 3 Gew.-% Ameisensäure, 2 Gew.-% eines Na-C₁₂/C₁₄-Alkylsulfats und 10 Gew.-% Pentan, jeweils bezogen auf das Vorkondensat, zugesetzt. Es wird kräftig gerührt und anschließend in einer Schäumform aus Polypropylen durch Einstrahlung von Mikrowellenenergie verschäumt. Der Schaumstoff wurde getrocknet und anschließend im Heißluftgebläse bei 110 °C für 10 min getempert.

Der erhaltene Melamin-/Formaldehyd-Schaumstoff hat eine Dichte von 7,8 g/l und einen Stempeldruckwert von 9,2 N.

### Beispiel 1 (erfindungsgemäß)

Herstellung eines Melamin-/Formaldehyd-Schaumstoffes mit 25 Gew.-% LDPE-Wachs, bezogen auf das Gesamtgewicht aus zur Schaumstoffherstellung eingesetztem Melamin-/Formaldehyd-Vorkondensat und partikelförmigen Füllmaterial, als Füllmaterial.

75 Gew.-Teile eines sprühgetrockneten Melamin-/Formaldehyd-Vorkondensates (Mol-verhältnis 1:3) wurden in 25 Gew.-Teilen Wasser gelöst, 3 Gew.-% Ameisensäure, 2 Gew.-% eines Na-C₁₂/C₁₄-Alkylsulfats, 20 Gew.-% Pentan, wobei die Gew.-% jeweils bezogen sind auf das Vorkondensat, und 25 Gew.-Teile LDPE-Wachs (Luwax A, BASF SE, Korngröße: 0,3 bis 0,7 mm, mittlerer Teilchendurchmesser 0,42 mm (d₅₀-Wert, zahlengemittelt, bestimmt mittels Licht- oder Elektronenmikroskopie in Verbindung mit Bildauswertung), Schmelzpunkt: 101- 109°C (DIN 51007, DSC) wurden zugesetzt, anschließend gerührt und dann in einer Form aus Polypropylen (zum Schäumen) durch Einstrahlung von Mikrowellenenergie verschäumt. Nach dem Verschäumen wurde 30 Minuten getrocknet und anschließend im Heißluftgebläse bei 220 °C für 10 min getempert.

Der erhaltene Melamin-Formaldehyd-Schaumstoff hat eine Dichte von 10,0 g/l und einen Stempeldruckwert von 20,1 N.

### Formaldehydemissionen

Die Schaumstoffe aus Beispiel 1 und den Vergleichsbeispielen V-A und V-B weisen nahezu identische Formaldehydemissionen im Bereich von 0,02 - 0,03 ppm gemäß DIN 55666 ppm auf. Der Schaumstoff aus Vergleichsbeispiel V-C weist eine Formaldehydemission von 0,08 ppm auf. Die Formaldehydemissionen der Schaumstoffe liegen somit unter dem in der Chemikalienverbotsordnung § 1 festgelegten Grenzwert von 0,1 ppm.

### Thermokomprimierung

Die getemperten Schaumstoffe aus Beispiel 1 und den Vergleichsbeispielen V-A, V-B und V-C wurden zu 21 mm dicken Platten zerschnitten. Der Zuschnitt wurde auf seiner Ober- und Unterseite jeweils mit einem hydrophoben Textilvlies aus einer Mischung aus PET- und Zellulose-Viskosefasern, abgedeckt. Die Textilvliese waren einseitig mit Klebstoff ausgerüstet (Polymermischung, Phenolharz, Melaminharz). Danach verpresste man die einzelnen Komponenten miteinander in einem Konturwerkzeug 60 sec bei einer Presstemperatur von 190 °C und einem Kolbenpressdruck von 45 bar (absolut). Die einzelnen Schaumstoffsegmente wurden dabei um 25 bis 100% komprimiert. Anschließend wurden die Formteile aus dem Presswerkzeug entnommen und die Konturgenauigkeit und Randlippenfestigkeit beurteilt.

Die Formteile gemäß den Vergleichsbeispielen V-A und V-B zeigen eine unvollständige Abformung der Geometrie des Presswerkzeugs mit nicht geschlossenen Randlippen, und waren deshalb unbrauchbar. Demgegenüber zeigt das Formteil gemäß Beispiel 1 eine deutliche Verbesserung der Konturgenauigkeit und Randlippenfestigkeit. Vergleichsbeispiel V-C zeigt eine sehr gute Abformung der Geometrie des Presswerkzeugs mit stabilen, geschlossenen Randlippen.

Das Vergleichsbeispiel V-A zeigt, dass sich auch aus formaldehydreichen Melaminharzen formaldehydarme Formteile herstellen ließen. Hierzu ist eine Tempertemperatur von 240 °C erforderlich. Das erhaltene Formteil war jedoch Ausschussware, da es unzureichende Ränder aufwies. Das Vergleichsbeispiel V-B zeigt, dass die Teilchengröße der polymeren Granulate eine wichtige Größe für die Thermokomprimierung darstellt. Die Teilchengröße in diesem Vergleichsbeispiel liegt nicht im erfindungsgemäßen Bereich. Die Thermoverformung dieses Schaumstoffs führt zu einem fehlerhaften Formteil. Vergleichsbeispiel V-C erlaubt die Herstellung thermoverformbarer Melaminharzschäume, aber die mechanischen Eigenschaften dieser Schaumstoffe, bestimmt anhand des Stempeldrucks, sind deutlich niedriger.

Die Beispiele belegen, dass ausgehend von Melamin/Formaldehyd-Vorkondensat mit einem Molverhältnis Formaldehyd : Melamin größer als 2, thermoverformbare Melamin-/Formaldehyd-Schaumstoffe mit guten mechanischen Eigenschaften zugänglich sind, die aber gleichzeitig geringe Formaldehyd-Emissionen aufweisen, falls wenigstens ein partikelförmiges Füllmaterial eingesetzt wird, dass eine Schmelztemperatur von höchstens 220 °C aufweist.

## Patentansprüche

1. Thermoverformbarer Melamin-/Formaldehyd-Schaumstoff, enthaltend 0,1 bis 50 Gew.-% wenigstens eines partikelförmigen Füllmaterials, wobei die Gew.-% auf das Gesamtgewicht aus zur Schaumstoffherstellung eingesetztem Melamin-/Formaldehyd-Vorkondensat und Füllmaterial bezogen sind, **dadurch gekennzeichnet, dass** das wenigstens eine partikelförmige Füllmaterial einen Schmelzpunkt von höchstens 220 °C aufweist.

2. Thermoverformbarer Melamin-/Formaldehyd-Schaumstoff nach Anspruch 1, **dadurch gekennzeichnet, dass** das wenigstens eine partikelförmige Füllmaterial einen mittleren Teilchendurchmesser von 5 µm bis 750 µm aufweist.

3. Thermoverformbarer Melamin-/Formaldehyd-Schaumstoff nach Anspruch 1 oder 2, **dadurch gekennzeichnet, dass** als wenigstens ein partikelförmiges Füllmaterial organische Oligomere oder Polymere eingesetzt werden.

4. Thermoverformbarer Melamin-/Formaldehyd-Schaumstoff nach einem der Ansprüche 1 bis 3, **dadurch gekennzeichnet, dass** als wenigstens ein partikelförmiges Füllmaterial ein organisches Polymer ausgewählt aus der Gruppe bestehend aus Polyethylen, Polypropylen, Polystyrol, Polyester, Polcarbonat, Polyamid, thermoplastisches Elastomere, und Mischungen davon eingesetzt wird.

5. Thermoverformbarer Melamin-/Formaldehyd-Schaumstoff nach einem der Ansprüche 1 bis 4, **dadurch gekennzeichnet, dass** das wenigstens eine partikelförmige Füllmaterial in die Porenstruktur des Schaumstoffs eingebettet ist und der mittlere Teilchendurchmesser dem mittleren Porendurchmesser der Schaumstruktur entspricht.

6. Thermoverformbarer Melamin-/Formaldehyd-Schaumstoff nach einem der Ansprüche 1 bis 5, **dadurch gekennzeichnet, dass** das Molverhältnis Formaldehyd/Melamin des Melamin/Formaldehyd-Vorkondensates größer 2, bevorzugt 2,5 bis 3,5, ist.

7. Thermoverformbarer Melamin-/Formaldehyd-Schaumstoff nach einem der Ansprüche 1 bis 6, **dadurch gekennzeichnet, dass** der Melamin-/Formaldehyd-Schaumstoff eine Formaldehydemission, gemessen nach DIN 55666, von 0,1 ppm oder weniger aufweist.

8. Verfahren zur Herstellung eines thermoverformbaren Melamin-/Formaldehyd-Schaumstoffes nach einem der Ansprüche 1 bis 7, **dadurch gekennzeichnet, dass** wenigstens ein Melamin-Formaldehyd-Vorkondensat in einem Lösungsmittel mit einer Säure, einem Dispergiermittel, einem Treibmittel und wenigstens einem partikelförmigen Füllmaterial bei Temperaturen oberhalb der Siedetemperatur des Treibmittels verschäumt, getrocknet und anschließend bei einer Temperatur oberhalb von 200°C getempert wird.

9. Verfahren zur Herstellung von Formteilen durch Thermoformen eines Schaumstoffs nach einem der Ansprüche 1 bis 6.

10. Verwendung eines Melamin-/Formaldehyd-Schaumstoffes nach einem der Ansprüche 1 bis 7 zur akustischen oder thermischen Isolierung im Bauwesen, im Automobil-, Schiffs- und Schienenfahrzeugbau, dem Bau von Raumfahrzeugen, in der Polsterindustrie oder zur Isolierung von Rohrleitungen.
